# FASCICULE DE BREVET EUROPEEN

(11) **EP 3 372 491 B1**
(45) Date de publication et mention de la délivrance du brevet: **13.05.2020**
(21) Numéro de dépôt: 18159870.7
(22) Date de dépôt: 05.03.2018
(51) Int. Cl.: B64C 13/10

(54) **DISPOSITIF DE SENSATION D'EFFORTS ET COMMANDE DE VOL COMPRENANT UN TEL DISPOSITIF DE SENSATION D'EFFORTS**
KRAFTMESSVORRICHTUNG UND FLUGSTEUERUNG, DIE EINE SOLCHE KRAFTMESSVORRICHTUNG UMFASST
FORCE-SENSING DEVICE AND FLIGHT CONTROL COMPRISING SUCH A FORCE-SENSING DEVICE

(30) Priorité: 06.03.2017 FR 1751803
(43) Date de publication de la demande: 12.09.2018
(73) Titulaire: LORD Solutions France, 26600 Pont-de-l'Isère (FR)
(72) Inventeur: ROUSSEY, Bastien, 26600 Tain L'Hermitage (FR)
(74) Mandataire: Delorme, Nicolas

(56) Documents cités:
- WO-A2-2006/018027
- JP-B2- 2 948 153

## Description

La présente invention concerne un dispositif de sensation d'efforts et une commande de vol comprenant un tel dispositif de sensation d'efforts.

La présente invention concerne plus particulièrement le domaine des commandes de vol d'aéronefs. Plus précisément, l'invention concerne les commandes manuelles situées à l'interface homme-machine d'un aéronef. Ces commandes peuvent être actionnées par exemple à la main ou au pied.

Il est connu d'équiper une commande de vol avec un dispositif de sensation d'efforts, qui sont conçus pour appliquer des efforts sur la commande de vol, de façon à produire un ressenti sur le pilote.

Un premier type connu de dispositif de sensation d'effort, que l'on peut qualifier de « dispositif de retour d'effort » (ou « force-feedback » en anglais), est conçu pour appliquer, sur la commande de vol, des efforts qui ont un lien avec des phénomènes réels agissant sur l'appareil qui est piloté par la commande. Par exemple, des efforts s'appliquant sur une surface de contrôle de l'aile peuvent donner lieu à la production d'un couple sur l'organe de commande de cette aile, à l'aide du dispositif de retour d'effort.

Un deuxième type connu de dispositif de sensation d'effort, que l'on peut qualifier de « dispositif de sensation artificielle », est conçu pour appliquer, sur la commande de vol, des efforts sans lien direct avec des phénomènes s'appliquant sur l'aéronef. Par exemple, un dispositif de sensation artificielle peut appliquer simplement un couple de sensation d'efforts sur la commande de vol, notamment en vue de compenser un phénomène de couplage oscillatoire entre l'aéronef et le pilote (également désigné par « Pilot Induced Oscillations » ou « PIO », en anglais). On peut également prévoir un dispositif de sensation artificielle qui est apte à appliquer une vibration artificielle, ou un ressenti de crantage lorsque la commande est mue, afin d'informer le pilote qu'un événement particulier est survenu au cours du pilotage de l'aéronef.

Pour générer les efforts produisant les sensations pour le pilote par l'intermédiaire de l'organe de commande de vol, ces dispositifs de sensation d'efforts comprennent un dispositif rotatif de génération de la sensation. Le dispositif rotatif peut être actif, tel qu'un moteur quatre quadrants, semi-actif, tel qu'un dispositif à poudre magnéto-rhéologique, ou encore passif, tel qu'une génératrice, un moteur sans balai non alimenté, ou un amortisseur rotatif hydraulique.

Compte-tenu de l'importance des efforts requis pour fournir une sensation perceptible par le pilote, l'organe de commande de vol est mécaniquement lié au dispositif rotatif de génération de la sensation par l'intermédiaire d'un réducteur mécanique. En fonction de l'application, le réducteur mécanique présente un rapport de réduction compris entre 50 et un ratio 200. Dans le cas où l'on simule un amortissement, le coefficient d'amortissement produit par le dispositif rotatif sur l'organe de commande du pilote est multiplié par un facteur compris entre 2500 et 40000, pour cette plage de rapport de réduction.

L'application d'un tel réducteur mécanique à une commande de vol d'aéronef impose que ce réducteur mécanique génère une friction particulièrement basse, tout en présentant un rendement particulièrement élevé. De plus, il est nécessaire que le jeu soit le plus faible possible, éventuellement nul, afin de garantir une précision et un confort de pilotage adapté. En outre, il est nécessaire que la commande soit douce, c'est-à-dire que la friction et le rendement soient constants et dépourvus d'ondulation sur toute la course de la commande. Ces exigences doivent être satisfaites pour une plage de température opérationnelle relativement large, à savoir par exemple entre -40°C (degrés Celsius) et 60°C. En effet, le domaine relatif aux commandes de vol est singulièrement exigeant, non seulement du fait des contraintes relatives au domaine aéronautique, mais aussi dans la mesure où il est nécessaire d'assurer une parfaite ergonomie de commande pour le pilote, qui agit avec beaucoup de précision et de sensibilité sur les commandes de vol. Le pilote est amené à ressentir très rapidement tout défaut existant au sein du réducteur mécanique, là où un tel réducteur aurait pu parfaitement convenir à d'autres applications.

Dans les dispositifs connus, le réducteur mécanique est généralement formé par un train d'engrenage, qui ne permet généralement pas de satisfaire à l'ensemble des exigences susmentionnées, qui sont, pour certaines, antagonistes, à savoir l'absence de friction et l'absence de jeu.

L'invention a donc pour but de porter remède aux inconvénients de l'art antérieur en proposant un dispositif de sensation d'efforts pour une commande de vol d'un aéronef qui présente à la fois un jeu et une friction particulièrement faibles, voire nuls, et un rendement mécanique élevé, à coût raisonnable.

Le document JP 2 948 153 B2 décrit un dispositif de sensation d'efforts pour une commande de vol.

L'invention a pour objet des dispositifs de sensation d'efforts définis dans chacune des revendications indépendantes 1, 4 et 7.

Une idée à la base de l'invention est de prévoir une transmission du mouvement entre le membre d'action et le dispositif rotatif par l'intermédiaire de contacts roulants, grâce à la mise en oeuvre du réducteur mécanique à système vis-écrou à éléments roulants. En prévoyant une transmission, de préférence exclusivement, par contacts roulants, le réducteur mécanique présente ainsi un jeu et une friction particulièrement faibles, voire nuls, et un rendement mécanique élevé, par rapport à un réducteur à train d'engrenage d'engrenage classique. Dans l'invention, on convertit ainsi le mouvement de rotation du membre d'action par rapport au support en un mouvement de translation de l'écrou par rapport au stator le long de l'axe secondaire, puis ce mouvement de translation en un mouvement de rotation de la vis et du rotor par rapport au stator, autour de l'axe secondaire. La mise en œuvre d'un système vis-écrou, plutôt que d'un train d'engrenage, rend en outre le dispositif de sensation d'efforts moins sensible aux variations de température. La mise en œuvre d'un tel système vis-écrou permet à la fois d'obtenir les effets et avantages susmentionnés, tout en étant d'un coût raisonnable, dans la mesure où un tel système vis-écrou est, en soi, relativement peu coûteux par rapport d'autres systèmes à éléments roulants plus élaborés et moins standards.

D'autres caractéristiques facultatives et avantageuses de l'invention sont définies dans les revendications 2, 3, 5, 6 et 8 à 11.

L'invention a également pour objet une commande de vol d'un aéronef définie dans la revendication 12.

L'invention sera mieux comprise à la lecture de la description qui suit, donnée uniquement à titre d'exemple non limitatif, et faite en référence aux dessins annexés, parmi lesquels :
- la figure 1 est une vue en perspective d'un dispositif de sensation d'efforts pour une commande de vol d'un aéronef selon un premier mode de réalisation conforme à l'invention,
- la figure 2 est une coupe selon un plan II-II d'un détail de la commande de vol de la figure 1,
- les figures 3 et 4 sont deux vues en perspective prises sous un angle différent, d'un dispositif de sensation d'efforts pour une commande de vol d'un aéronef, selon un deuxième mode de réalisation conforme à l'invention,
- la figure 5 est une vue en perspective d'un dispositif de sensation d'efforts pour une commande de vol d'un aéronef, selon un troisième mode de réalisation conforme à l'invention,
- la figure 6 est une vue similaire à la figure 5, d'un dispositif de sensation d'efforts pour une commande de vol d'un aéronef, selon un quatrième mode de réalisation conforme à l'invention, et
- la figure 7 est une vue de côté d'un dispositif de sensation d'efforts pour une commande de vol d'un aéronef, selon un cinquième mode de réalisation conforme à l'invention.

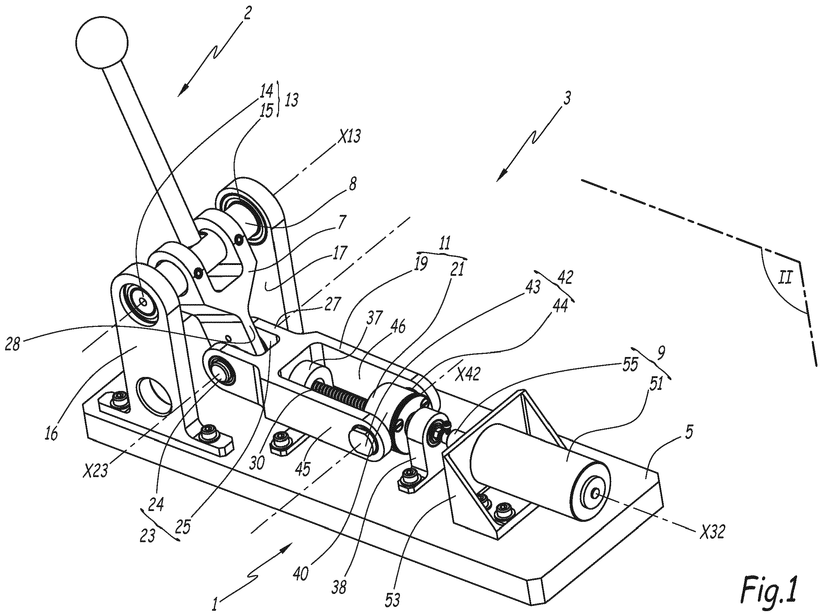

La figure 1 représente un premier mode de réalisation d'une commande de vol 3. Cette commande de vol 3 est configurée pour équiper un aéronef, lequel n'est pas illustré. A titre d'exemple, l'aéronef est un avion ou un hélicoptère. La commande de vol 3 est notamment conçue pour être intégrée à un cockpit de cet aéronef, comme partie d'une interface homme-machine pour le pilotage de l'aéronef.

La commande de vol 3 comprend un dispositif de sensation d'efforts 1 et un organe de commande 2. Dans le cas présent, l'organe 2 forme un levier de commande actionnable à la main, préférentiellement par un pilote de l'aéronef, ou par un membre d'équipage de l'aéronef. De préférence, la commande de vol 3 forme la chaine de réduction d'un mini-manche d'aéronef. En variante, l'organe de commande 2 peut être actionnable au pied, en formant par exemple une pédale de commande. La commande de vol 3 agit sur une ou plusieurs surfaces de contrôle de l'aéronef, telles que des volets ou des ailerons, ou encore sur l'orientation d'une hélice.

Le dispositif de sensation d'efforts 1 comprend un support 5, un membre d'action 7, un dispositif rotatif 9 et un réducteur mécanique 11.

Le support 5 est attaché de façon fixe à l'aéronef, et en particulier au cockpit de ce dernier.

Le membre d'action 7 est attaché au support 5 par l'intermédiaire d'une liaison pivot 13, de sorte que le membre d'action est libre en rotation autour d'un axe primaire X13 par rapport au support 5. Dans le présent document, l'expression « liaison pivot » désigne une liaison pivot qui est axialement non glissante, sauf mention expresse du contraire.

Dans le présent exemple, le membre d'action 7 comprend un corps axial 8, qui est coaxial avec l'axe X13, et le support 5 comprend deux bras de support 16 et 17 s'étendant dans des plans orthogonaux à l'axe X13 et distants l'un de l'autre. Le corps axial 8 est monté pivotant sur chaque bras 16 et 17, par l'intermédiaire respectivement de deux paliers 14 et 15, formant la liaison pivot 13. La liaison pivot 13 est ainsi en deux parties, formées chacune par l'un des paliers 14 et 15. Le membre d'action 7 s'étend entre les paliers 14 et 15, ce qui garantit une bonne stabilité et une résistance aux vibrations de ce membre 7.

Le membre 7 a avantageusement une fonction de levier, dans la mesure où il est attaché au support 5 à l'aide de la liaison pivot 13 dont l'axe X13 est fixe par rapport au support 5.

De manière générale, pour le dispositif 1, on préfère l'utilisation de roulements à éléments roulants, tels que des billes ou des rouleaux, dans la mesure où ils permettent d'obtenir un jeu nul et un rendement mécanique élevé. De préférence, chaque liaison pivot du dispositif 1 comprend au moins deux paliers à éléments roulants à contact oblique, qui sont pré-chargés, par exemple avec des rondelles élastiques, pour annuler les jeux radiaux de ces paliers. De plus, pour chaque palier, on prévoit d'immobiliser la bague extérieure, par exemple par serrage, ainsi que la bague intérieure, par serrage ou scellement.

De manière générale, on prévoit avantageusement que toutes les liaisons pivot du dispositif 1 sont exemptes de contacts frottants et sont au contraire à contacts roulants, afin d'annuler tout jeu et de présenter un rendement élevé, pour ainsi répondre aux exigences liées au domaine particulier de la commande de vol.

Ainsi, les paliers 14 et 15 sont préférentiellement à éléments roulants, tels que des roulements à bille ou à rouleaux.

En variante, selon l'application, on peut prévoir des paliers sans roulement.

Dans le présent exemple, l'organe de commande 2 est attaché de façon fixe au membre d'action 7, et plus particulièrement au corps 8, de façon à être libre en rotation autour de l'axe primaire X13, solidairement avec le membre d'action 7. En variante, l'organe de commande 2 comprend davantage de degrés de liberté par rapport au membre d'action 7, mais est néanmoins lié à ce dernier en rotation autour de l'axe X13.

Le réducteur mécanique 11 comprend une bielle 19 et un système vis-écrou 21.

La bielle 19 est attachée au membre d'action 7 par l'intermédiaire d'une liaison pivot 23, en étant libre en rotation par rapport au membre 7 autour d'un axe de bielle X23, parallèle à l'axe X13. De préférence, seule la liaison pivot 23 relie la bielle 19 au membre 7, aucune liaison supplémentaire ou membre intermédiaire n'étant prévu.

La bielle 19 comprend deux bras de support 26 et 27 parallèles, disposées en fourche, s'étendant dans un plan orthogonal à l'axe X23. Le membre 7 comprend un bras 28 solidairement fixé au corps 8, le bras 28 s'étendant dans un plan orthogonal à l'axe X13, entre les paliers 14 et 15 et entre les bras 26 et 27. Les bras 26 et 27 portent respectivement des paliers 24 et 25, formant chacun une partie de la liaison pivot 23. Les deux parties 24 et 25 de la liaison pivot 23 sont donc réparties le long de l'axe X23 de part et d'autre du membre 7, ce qui confère au dispositif 1 une bonne stabilité et une certaine résistance aux vibrations. Le membre 7, la liaison 23 et la bielle 19 assurent par ailleurs ensemble une fonction de compas anti-rotation, en maintenant fonctionnellement un axe de bielle X42, décrit ci-après, parallèle à l'axe X13.

Le système 21 est à éléments roulants, tels que des billes, ce qui réduit le jeu tout en permettant d'obtenir un rendement élevé, ce qui est particulièrement avantageux par rapport à un train d'engrenages classique. De préférence, le système vis-écrou 21 est une vis à bille standard du commerce, de sorte que son coût est relativement faible.

On choisit préférentiellement d'utiliser un système 21 à billes à pistes elliptiques et à jeu réduit. En variante, on utilise un système 21 à billes à pistes en ogive, à quatre contacts, pour annuler le jeu axial. En variante, on choisit un système 21 à jeu standard, moins coûteux, et dont le jeu reste beaucoup plus faible que dans un réducteur à train d'engrenages classique.

Le système vis-écrou 21 présente un pas qui est préférentiellement compris entre 0.6 mm et 7.5 mm, et vaut par exemple 2 mm

Le système 21 comprend un écrou 40, qui est attaché à la bielle 19 par l'intermédiaire d'une liaison pivot 42, de façon à être libre en rotation autour d'un axe de bielle X42 par rapport à la bielle 19. L'axe X42 est parallèle aux axes X13 et X23. De préférence, seule la liaison pivot 42 relie la bielle 19 à l'écrou 40, aucune autre liaison ou membre intermédiaire n'étant prévu pour relier la bielle 19 à l'écrou 40. Les axes X42 et X32 sont sécants, c'est-à-dire se croisent, et sont orthogonaux. La bielle 19 comprend deux bras 45 et 46 parallèles entre eux, s'étendant dans des plans orthogonaux à l'axe X42 et distants, de façon à être disposés en fourche de part et d'autre de l'écrou 40. Les bras 45 et 46 s'étendent en direction opposée des bras 26 et 27. Les bras 45 et 46 portent respectivement des paliers 43 et 44, qui forment la liaison pivot 42, et par l'intermédiaire desquels la bielle 19 est attachée à l'écrou 40. Ainsi, la bielle 19 lie le membre 7 à l'écrou 40.

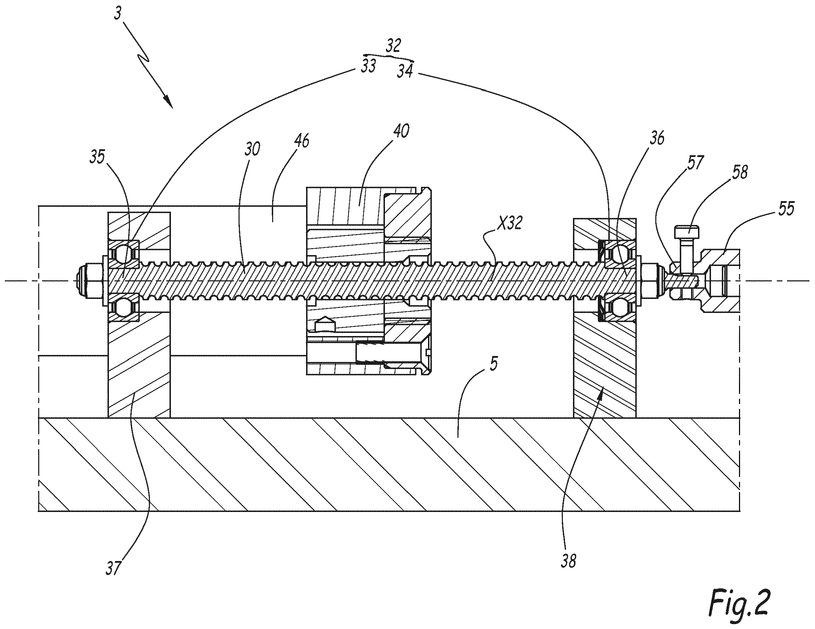

Le système 21 comprend une vis 30, qui est attachée au support 5 par une liaison pivot 32, de façon à être libre en rotation autour d'un axe secondaire X32 par rapport au support 5. Dans le présent exemple, le support 5 comprend des bras 37 et 38 parallèles entre eux, s'étendant dans des plans orthogonaux à l'axe X32 et espacés le long de cet axe X32. Tel que visible sur la figure 2, la vis 30 présente des extrémités 35 et 36 qui sont respectivement supportées par les bras 37 et 38, par l'intermédiaire de paliers 33 et 34. Dans le cas où le dispositif 9 est passif ou semi-actif, comme décrit ci-après, notamment dans le cas où seul un couple d'amortissement est exercé, les paliers 33 et 34 sont préférentiellement à contact oblique disposés en « O », de façon à reprendre les efforts radiaux et axiaux exercés sur la vis 30, sans flambement de cette dernière. Grâce à cette disposition, les efforts axiaux sont toujours appliqués en traction sur la vis 30 dans le cas où le dispositif 9 est passif ou semi-actif Enfin, cette disposition en « O » assure une meilleure rigidité des points de rotulage de la vis 30, ce qui permet également d'améliorer le comportement au flambement dans le cas d'un dispositif 9 actif, comme décrit ci-après.

Les paliers 33 et 34 forment ainsi deux parties de la liaison pivot 32. L'axe X32 est orthoradial à l'axe X13, c'est-à-dire qu'il s'étend dans un plan orthogonal à l'axe X13 sans rencontrer ce dernier.

Les bras 45 et 46 de la bielle 19 s'étendent le long de la vis 30, de part et d'autre de cette dernière, et sont reliés entre eux au voisinage de son extrémité 35, dans le prolongement de la vis 30. La bielle 19 est ainsi orientée dans une direction proche ou à faible inclinaison par rapport à la vis 30, de sorte que les efforts circulant entre la vis 30 et la bielle 19 par l'intermédiaire de l'écrou 40, comme décrit plus bas, sont sensiblement dans l'axe de la vis 30, ou à faible inclinaison par rapport à la vis 30. Le dispositif 1 est ainsi particulièrement résistant aux vibrations.

L'écrou 40 est à la fois lié au support 5 en rotation autour de l'axe X32, par l'intermédiaire de la bielle 19 et du membre 7, et hélicoïdalement avec la vis 30, le long et autour de l'axe X32, par l'intermédiaire des éléments roulants. Les liaisons pivot 13, 23 et 42 ont donc une fonction d'anti-rotation de l'écrou 40 autour de l'axe X32. Les éléments roulants du système 21 sont préférentiellement contenus dans l'écrou 40. La transmission du mouvement entre l'écrou 40 et la vis 30 se fait exclusivement à l'aide de ces éléments roulants. Cette transmission est donc effectuée exclusivement par contact roulant non frottant, pour satisfaire aux exigences particulières du domaine de la commande de vol. Le système 21 est réversible, c'est-à-dire qu'un actionnement de l'écrou 40 entraîne la vis 30, et vice-versa. En particulier, l'écrou 40, en étant translaté le long de l'axe X32, entraîne en rotation la vis 30 par l'intermédiaire des éléments roulants. La vis 30, lorsqu'elle est mise en rotation autour de l'axe X32, entraine l'écrou 40 en translation le long de l'axe X32.

La bielle 19 peut être qualifiée de bielle, avantageusement dans la mesure où elle n'est pas liée au support 5 directement et où elle comprend deux liaisons pivot 23 et 42 dont les axes ne sont pas fixes par rapport au support 5, ces axes étant préférentiellement parallèles.Le levier 2 présente une orientation dite « neutre » autour de l'axe X13 par rapport au support 5, et deux positions extrêmes écartées par exemple de 20° (degrés) par rapport à l'orientation neutre. Dans le présent exemple, lorsque le levier 2 est en orientation neutre, le membre 7 est perpendiculaire et sécant avec l'axe X32, la bielle 19 s'étend dans un plan parallèle à l'axe X32, et le membre 7 est perpendiculaire à la bielle 19. Ainsi, lorsque l'on oriente le membre 7 à l'écart de cette position neutre, comme illustré sur la figure 1, l'inclinaison de la bielle par rapport à l'axe X32 est très faible, par exemple de quelques degrés. Ainsi, les efforts circulant entre la bielle 19 et l'écrou 40 sont parallèles ou quasi-parallèles à l'axe X23, quelle que soit l'orientation du levier 2 entre ses deux orientations extrêmes.

Le dispositif rotatif 9 comprend un stator 51, qui est fixement attaché au support 5, par l'intermédiaire d'une équerre 53. Pour le moins, le stator 51 est attaché au support en étant lié en rotation à ce dernier autour de l'axe X32, de sorte que l'écrou 40 est fixe en rotation autour de l'axe X32 par rapport au stator 51.

Le dispositif 9 comprend également un rotor 55, qui s'étend coaxialement avec l'axe X32 et qui est lié en rotation avec la vis 30 autour de l'axe X32, voire fixé à la vis 30, par un système d'accouplement 57 à vis radiale de serrage 58, visible sur la figure 2. Le rotor 55 est attaché au stator 51 en étant libre en rotation par rapport au stator 51 autour de l'axe X32.

De manière générale, le dispositif 9 est configuré pour appliquer un couple de sensation d'efforts sur le rotor 55 par rapport au stator 51, autour de l'axe X32. Ce couple de sensation d'efforts, lorsqu'appliqué, est ressenti par le pilote lorsqu'il manipule l'organe de commande 2, au travers du réducteur 11 et du membre d'action 7. Ainsi, le dispositif rotatif 9 peut être qualifié de dispositif de génération de la sensation d'effort.

Le dispositif 9 peut être un moteur électrique, par exemple à aimant permanent et sans balais. Dans ce cas, le moteur électrique est préférentiellement un moteur à quatre quadrants de fonctionnement. Le dispositif 9 comprend des phases électriques, contenues dans le stator 51 et interagissant avec l'aimant. Les phases et l'aimant forment un moyen électromagnétique d'application du couple de sensation d'efforts, dont le fonctionnement dépend d'un apport en énergie électrique externe, appliqué aux phases. Dans ce cas, le dispositif 9 est un élément actif du dispositif 1. On prévoit avantageusement un dispositif piloté, non illustré, d'alimentation en énergie électrique de le dispositif 9, pour contrôler et faire varier à souhait la valeur du couple de sensation d'efforts appliqué sur le rotor 55, par exemple en fonction de la position angulaire du membre 7 par rapport au support 5, ou en fonction d'autres paramètres ou phénomènes s'appliquant sur l'aéronef.

Alternativement, le dispositif 9 peut être une génératrice électrique, formée par un moteur électrique similaire à celui décrit ci-avant, mais non alimenté en énergie électrique. Dans ce cas, le dispositif 9 est un élément passif du dispositif 1, qui ne nécessite pas d'apport d'énergie externe pour fonctionner, et qui produit un couple d'amortissement sensiblement proportionnel à la vitesse de rotation du rotor 55 par rapport au stator 51. Pour cela, les phases de la génératrice sont reliées entre elles par des résistances de valeur relativement faible.

L'avantage principal d'utiliser un dispositif sans balais, que le dispositif 9 soit actif ou passif, est que ce dispositif ne nécessite que peu d'entretien et bénéficie d'une longue durée de vie sans s'user. Par ailleurs, l'usage du dispositif sans balais abaisse la valeur du frottement. Un autre type de moteur électrique ou de génératrice électrique peut toutefois être utilisé en fonction de l'application.

On peut également prévoir un dispositif 9 semi-actif, formé par un dispositif rotatif à poudre magnéto-rhéologique. Dans ce type de dispositif comprend d'une part un fluide comprenant un mélange d'une poudre magnétique et d'une matrice fluide rhéologique, et d'autre part un moyen d'application d'un champ magnétique sur le ce fluide. En fonction du champ magnétique appliqué, le fluide change de viscosité et applique sur le rotor 55 une valeur de friction, que l'on peut faire varier en faisant varier le champ magnétique, ou en désactivant le champ magnétique. En fonction de la valeur de friction appliquée, il en résulte qu'un couple est appliqué sur le rotor 55 par rapport au stator 51. Dans le cas d'un dispositif rotatif à poudre magnéto-rhéologique, le couple de sensation d'efforts appliqué correspond donc à un couple d'amortissement dont la valeur peut être commandée en fonction d'une énergie électrique appliquée sur le dispositif. Par exemple, ce couple peut être compris entre 0,2 N.m (Newton mètre), en l'absence d'énergie électrique, et 20 N.m, lorsqu'une valeur maximale d'énergie électrique est appliquée.

En variante, le dispositif 9 peut comprendre tout moyen apte à appliquer un couple de sensation d'efforts approprié, en fonction de l'application du dispositif 1. On peut prévoir notamment des dispositifs passifs mécaniques, du genre dispositif à amortissement hydraulique.

Le réducteur mécanique 11 lie la rotation du membre 7 avec la rotation du rotor 55 avec un rapport de réduction, qui dépend notamment de la valeur du pas du système vis-écrou 21, de la distance séparant les axes X13 et X23, de la distance séparant les axes X23 et X42, et de la position angulaire du membre 7 par rapport à l'orientation neutre. De préférence, le rapport de réduction est compris entre 50 et 200 De façon plus préférentielle, on prévoit que le rapport de réduction est compris entre 60 et 160

En variante, pour réduire encore le jeu dans le dispositif 1, on prévoit, à la place de l'écrou 40, un chariot incluant deux écrous liés hélicoïdalement à la vis 30, le chariot étant attaché à la bielle 19 via une liaison pivot similaire à la liaison 42. Les deux écrous sont axialement calés l'un par rapport à l'autre, par exemple à l'aide de rondelles pré-chargées, pour annuler totalement le jeu entre les écrous et la vis.

De préférence, le membre 7 ne comprend pas davantage de liaisons que les liaisons 13 et 23 susmentionnées.

De préférence, la bielle 19 ne comprend pas davantage de liaisons que les liaisons 23 et 42 susmentionnées.

De préférence, l'écrou 40 ne comprend pas davantage de liaisons que la liaison 42 et la liaison avec l'écrou 30 susmentionnée.

On obtient un compas anti-rotation, lorsque, cumulativement : un levier, ici le membre 7, est lié à un support, ici le support 5, par une première liaison pivot, ici la liaison 13 ; une bielle, ici la bielle 19, est liée au levier par une deuxième liaison pivot, ici la liaison 23, autour d'un axe parallèle à celui de la première liaison pivot, l'axe de la deuxième liaison pivot étant mobile en rotation autour de l'axe de la première liaison pivot par rapport au support ; et la bielle comporte une troisième liaison pivot, ici la liaison 42, autour d'un axe parallèle aux axes des premières et deuxième liaisons pivot, la troisième liaison pivot étant prévue pour être attachée un élément subséquent, ici l'écrou 40, duquel on souhaite empêcher la rotation autour d'un axe perpendiculaire aux axes des trois liaisons pivots susmentionnées, ici l'axe X32.

Dans le présent mode de réalisation, la mise en œuvre d'une bielle avec des bras disposés en fourche est avantageuse pour des raisons de rigidité et de compacité. Toutefois, on pourrait envisager une bielle sans fourche afin de simplifier et de rendre moins coûteux le dispositif de sensation d'effort.

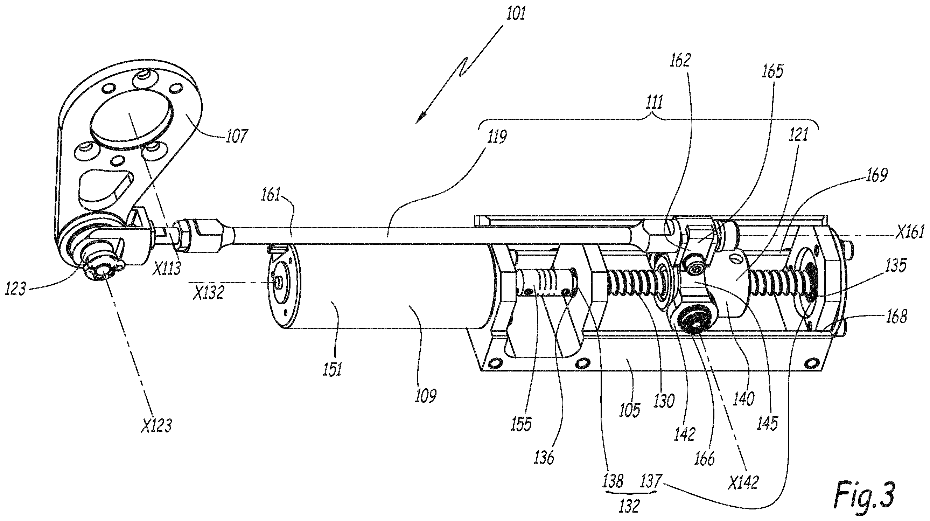

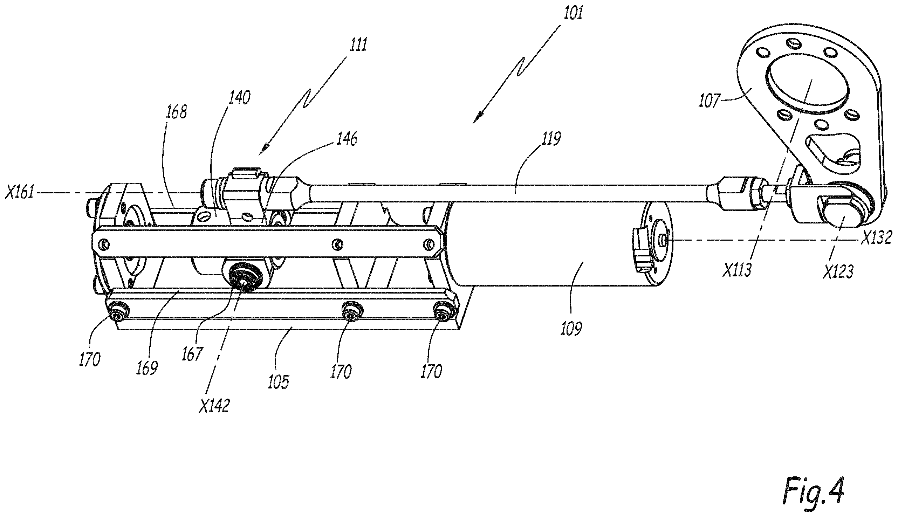

Les figures 3 et 4 illustrent un dispositif de sensation d'efforts 101 selon un deuxième mode de réalisation, qui présente des caractéristiques similaires à celles du dispositif 1 du premier mode de réalisation illustré sur les figures 1 et 2. Les caractéristiques similaires du premier et du deuxième mode de réalisation sont désignées par des numéros de référence augmentés de 100 pour le dispositif de sensation d'efforts 101, par rapport au dispositif de sensation d'efforts 1.

Le dispositif de sensation d'efforts 101 est conçu pour équiper un aéronef, au sein d'une commande de vol. De préférence, le dispositif 101 est intégré à une commande d'aéronef en formant un équipement de type mini-manche. Le dispositif 101 comprend un support 105, un membre d'action 107, qui est attaché au support 105 en étant libre en rotation autour d'un axe primaire X113. La liaison entre le support 105 et le membre d'action 107 n'est pas illustrée. Cette liaison non-illustrée est avantageusement une liaison pivot autour de l'axe X113. Le dispositif 101 comprend également un dispositif rotatif 109, comprenant un stator 151, qui est fixement attaché au support 105, et un rotor 155, qui est attaché au stator 151 en étant libre en rotation par rapport au stator 151 autour d'un axe secondaire X132. Le dispositif 109 comprend un moyen d'application d'un couple de sensation d'efforts de la rotation du rotor 155 par rapport au stator 151 autour de l'axe secondaire X132, ce moyen étant préférentiellement enfermé dans le stator 151.

Le dispositif 101 comprend également un réducteur mécanique 111, qui lie, avec un rapport de réduction, la rotation du membre d'action 107 par rapport au support 105 autour de l'axe primaire X113, avec la rotation du rotor 155 par rapport au stator 151 autour de l'axe secondaire X132.

Plus précisément, le réducteur mécanique comprend une bielle 119 et un système vis-écrou 121 à éléments roulants, le système 121 comprenant une vis 130, qui est attachée au rotor 155 à une extrémité 136 de la vis 130. La vis 130 est en rotation avec le rotor 155 autour de l'axe secondaire X132 par son extrémité 136. La vis 130 est également attachée au support 105 à l'aide d'une liaison pivot 132, comprenant une première partie 137 supportant une extrémité 135 de la vis 130, opposée à l'extrémité 136, et une deuxième partie 138 supportant l'extrémité 136. Le stator 151 est fixé au support 105 via la partie 138 et se situe ainsi à l'extrémité 136 de la vis 130.

Le système 121 comprend un écrou 140 renfermant les éléments roulants du système 121. L'écrou 140 est lié hélicoïdalement avec la vis 130 autour et le long de l'axe secondaire X132, par l'intermédiaire des éléments roulants.

La bielle 119 lie le membre d'action 107 à l'écrou 140, en étant attachée au membre d'action 107 par une liaison pivot 123 et à l'écrou 140 par une liaison pivot 142. Ainsi, la bielle 119 est libre en rotation par rapport au membre d'action 107, autour d'un axe X123 de la liaison 123, l'axe X123 étant parallèle à l'axe X113, et est libre en rotation par rapport à l'écrou 140 autour d'un axe X142 de la liaison 142, l'axe X142 étant parallèle à l'axe X113. L'axe X142 et l'axe X132 sont sécants et orthogonaux.

La bielle 119 du dispositif 101 présente une forme générale de « L », et inclut une partie 161 et une partie 162. La partie 161 relie la liaison 123 à la partie 162, et la partie 162 relie la partie 161 à la liaison 142. La partie 162 comprend deux bras 145 et 146 qui s'étendent en fer à cheval, de part et d'autre de l'écrou 140, à partir de l'axe X142. Chaque bras 145 et 146 porte une partie de la liaison 142, chaque partie de cette liaison 142 étant un palier à éléments roulants coaxial avec l'axe X142. La partie 162 comprend également un noyau 165 reliant solidairement les bras 145 et 146 entre eux. La partie 162 de la bielle 119 du dispositif 101 s'étend ainsi de façon radiale par rapport à l'écrou 140 et à son axe X132, alors que les bras 45 et 46 de la bielle 19 du dispositif 1 s'étendent le long de l'axe X32.

La partie 161 est solidairement fixée à la partie 162 par l'intermédiaire du noyau 165 et s'étend selon un axe X161 qui, lorsque le membre 107 est dans une orientation neutre par rapport au support 105, est sensiblement parallèle et non confondu avec l'axe X132. L'axe X161 est orthogonal à l'axe X123 et coupe cet axe X123, tout en partageant un plan commun avec l'axe X132. Ainsi, au niveau du noyau 165, la bielle 119 forme un coude, préférentiellement à angle droit.

La partie 161 présente une longueur, le long de l'axe X161, mesurée du noyau 165 jusqu'à l'axe X123, qui est très supérieure, par exemple au moins trois fois supérieure à la longueur séparant l'axe X142 du noyau 165, mesurée dans le plan défini par les axes X161 et X132. La longueur de la partie 161 susmentionnée est également très supérieure, par exemple au moins trois fois supérieure, à celle de la distance séparant les axes X113 et X123 Le rapport élevé entre la longueur de la partie 161 et les deux autres longueurs susmentionnées permet d'assurer que le membre 107, lors de sa rotation autour de l'axe X113 par rapport au support 105, imprime une rotation plus faible à la bielle 119 autour de l'axe X142, de sorte que l'axe X161 reste le plus proche possible de la parallèle avec l'axe X132. Ce rapport de longueurs permet de contenir la linéarité du rapport de réduction choisi, c'est-à-dire de faire en sorte que ce rapport de réduction soit quasiment constant, quelle que soit l'orientation du membre d'action 107.

Pour des raisons de gain de place, la partie 161 de la bielle 119 du dispositif 101, à partir du noyau 165, s'étend du côté de l'extrémité 136 de la vis 130, alors que la bielle 19 du dispositif 1 s'étend au contraire du côté de l'extrémité 35 de la vis 30.

Le dispositif 101 comprend également des moyens pour bloquer l'écrou 140 en rotation autour de l'axe secondaire X132 par rapport au stator 151. Dans le présent exemple, ces moyens comprennent deux galets 166 et 167 attachés à l'écrou 140 ou à la partie 162 de la bielle 119, en étant répartis de part et d'autre de l'écrou 140 de façon coaxiale avec l'axe X142. Les galets 166 et 167 sont libres en rotation par rapport à l'écrou 140 et par rapport à la bielle 119. En l'espèce, les galets 166 et 167 sont chacun liés à l'écrou 140 ou à la bielle 119 par l'intermédiaire d'un palier à élément roulants. Les moyens de liaison en rotation de l'écrou 140 comprennent également des rails de guidage 168 et 169, le long et contre lesquels les galets 166 et 167 sont configurés pour rouler lors du déplacement de l'écrou 140 le long de l'axe X132. Les rails de guidage 168 et 169 s'étendent parallèlement à, et à distance de, l'axe X132, et forment respectivement deux bandes de roulement, par exemple planes, pour les galets 166 et 167. Les rails 168 et 169 sont fixement attachés au support 105. La position et l'orientation d'au moins l'un des rails 168 et 169 est préférentiellement ajustable à l'aide de vis de pression. Dans le présent exemple, trois vis 170 illustrées sur la figure 4 permettent d'ajuster le rail 169. Par réglage des vis 170, on ajuste le jeu et/ou la friction qui pourraient exister entre le les galets 166 et 167 et les rails 168 et 169 respectivement. L'interaction des galets 166 et 167 avec les rails 168 et 169 forme un système qui assure le blocage de la rotation de l'écrou 140 autour de l'axe X132 par rapport au support 105 et au stator 151.

En variante, en fonction de l'application, on peut mettre en œuvre tout moyen approprié de blocage en rotation de l'écrou 140 autour de l'axe X132 par rapport au stator 151.

De préférence, le membre 107 ne comprend pas davantage de degrés de liberté par rapport au support 105, que son degré de liberté en rotation autour de l'axe X113, et n'est pas lié par une autre liaison que la liaison 123 susmentionnée, et que toute liaison donnant au membre 107 son degré de liberté en rotation par rapport au support 105 autour de l'axe X113.

De préférence, la bielle 119 ne comprend pas davantage de liaisons que les liaisons 123 et 142, et que le moyen de blocage en rotation assuré par les galets 166 et 167.

De préférence, l'écrou 140 ne comprend pas davantage de liaisons que la liaison 142, que la liaison avec la vis 130 et que le moyen de blocage en rotation assuré par les galets 166 et 167.

Dans le mode de réalisation des figures 3 et 4, on obtient également un compas anti-rotation, puisque, cumulativement : un levier, ici le membre 107, est lié à un support, ici le support 105, par une première liaison pivot, ici une liaison non représentée autour de l'axe X113 ; une bielle, ici la bielle 119, est liée au levier par une deuxième liaison pivot, ici la liaison 123, autour d'un axe parallèle à celui de la première liaison pivot, ici l'axe X123, l'axe de la deuxième liaison pivot étant mobile en rotation autour de l'axe de la première liaison pivot par rapport au support ; et la bielle comporte une troisième liaison pivot, ici la liaison 142, autour d'un axe parallèle aux axes des premières et deuxième liaisons pivot, la troisième liaison pivot étant prévue pour être attachée un élément subséquent, ici l'écrou 140, duquel on souhaite empêcher la rotation autour d'un axe perpendiculaire aux axes des trois liaisons pivots susmentionnées, ici l'axe X132.

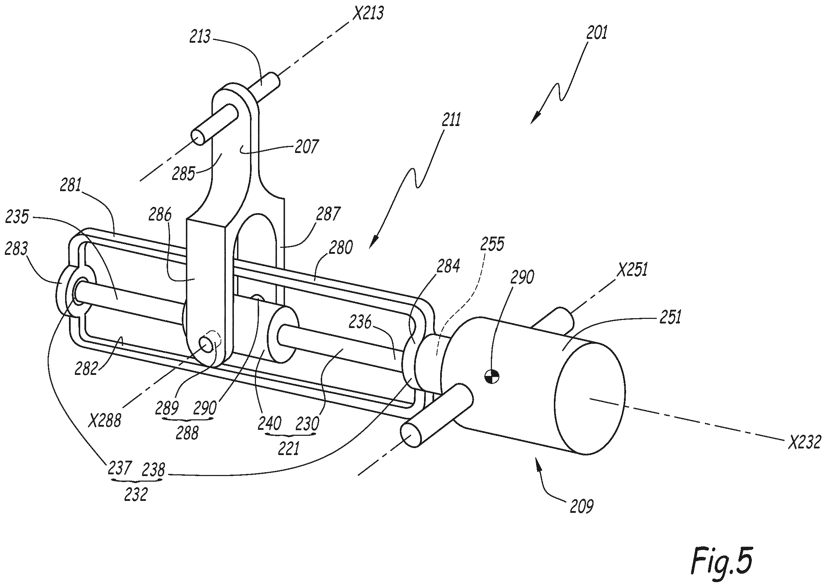

La figure 5 illustre un dispositif de sensation d'efforts 201 selon un troisième mode de réalisation, qui présente des caractéristiques similaires à celles du dispositif 1 du premier mode de réalisation illustré sur les figures 1 et 2. Les caractéristiques similaires du premier et du troisième mode de réalisation sont désignées par des numéros de référence augmentés de 200 pour le dispositif de sensation d'efforts 201, par rapport au dispositif de sensation d'efforts 1.

Le dispositif de sensation d'efforts 201 est conçu pour équiper un aéronef, au sein d'une commande de vol. De préférence, le dispositif 201 est intégré à une commande d'aéronef en formant un équipement de type boîtier amortisseur ou boîtier moteur, monté en parallèle d'une chaîne de commande de vol mécanique. Le dispositif 201 comprend un support, non illustré, ainsi qu'un membre d'action 207, qui est attaché au support en étant libre en rotation autour d'un axe primaire X213, via une liaison pivot 213 dont seul l'arbre est représenté. Pour cela, on prévoit préférentiellement une liaison pivot, non illustrée, liant le membre 207 au support. La liaison pivot comprend par exemple un ou plusieurs paliers à éléments roulants.

Le dispositif 201 comprend également un dispositif rotatif 209, comprenant un stator 251, et un rotor 255, dissimulé par le stator 251 sur la figure 5. Le rotor 255 du dispositif 201 est attaché au stator 251 en étant libre en rotation par rapport au stator 251 autour d'un axe secondaire X232. Le dispositif 209 comprend également un moyen d'application d'un couple de sensation d'efforts de la rotation du rotor 255 par rapport au stator 251 autour de l'axe secondaire X232.

Dans ce troisième mode de réalisation, le stator 251 est attaché au support du dispositif 201 en étant libre en rotation, autour d'un axe de stator X251, par rapport audit support. Pour cela, on prévoit préférentiellement une liaison pivot, non illustrée, liant le stator 251 au support. La liaison pivot comprend par exemple un ou plusieurs paliers à éléments roulants. Le stator 251 n'est donc pas fixe par rapport au support, et peut au contraire librement pivoter autour de l'axe X251. Dans cette configuration, le stator 251 est néanmoins lié en rotation au support autour d'un axe secondaire X232. L'axe X251 est parallèle à l'axe X213.

En fonction de l'application, on prévoit que le dispositif 209 est actif, passif, ou semi-actif, selon les définitions qui précèdent.

Le dispositif 201 comprend un réducteur mécanique 211, qui lie, avec un rapport de réduction, la rotation du membre d'action 207 par rapport au support autour de l'axe X213, avec la rotation du rotor 255 par rapport au stator 251, autour de l'axe secondaire X232.

Le réducteur mécanique 211 comprend un système vis-écrou 221 à éléments roulants, qui comprend lui-même une vis 230, un écrou 240, ainsi que des éléments roulants, non visibles sur la figure 5, qui sont contenus dans l'écrou 240.

La vis 230 présente deux extrémités 235 et 236, et est attachée au rotor 255 par son extrémité 236 de façon à être liée en rotation au rotor 255 autour de l'axe secondaire X232. Le dispositif 201 comprend une armature ou cartouche 280, qui est fixement attachée au stator 251.

Dans le présent exemple, l'armature 280 forme un cadre. L'armature 280 comprend deux branches 281 et 282, qui s'étendent parallèlement à l'axe X232, de part et d'autre de cet axe X232, sur une longueur s'étendant d'une extrémité 235 à l'autre extrémité 236 de la vis 230. L'armature 280 comprend deux branches 283 et 284 parallèles, s'étendant perpendiculairement à l'axe X232 et étant disposées respectivement aux extrémités 235 et 236 de la vis 230. Chaque branche 283 et 284 relie les branches 281 et 282 entre elles pour former un cadre rigide. L'armature 280 est fixement attachée au stator 251 via la branche 284. La vis 230 traverse la branche 284 pour être attachée au rotor 255.

La vis 230 est attachée à l'armature 280 par l'intermédiaire d'une liaison pivot 232 comprenant deux parties 237 et 238, attachées respectivement aux branches 283 et 284. De préférence, chaque partie 237 et 238 est formée par un palier à éléments roulants.

Le stator 251 et l'armature 280 forment ainsi un ensemble solidaire, libre en rotation autour de l'axe X251 par rapport au support. En conséquence, le rotor 255 et la vis 230 sont également libres en rotation autour de l'axe X251 par rapport au support solidairement, avec cet ensemble. De façon préférentielle, afin de limiter des phénomènes vibratoires indésirables au sein du dispositif 201, on positionne l'axe X251, c'est-à-dire la liaison pivot liant le stator 251 au support, de façon à ce que cet axe X251 traverse un centre de gravité 290 de l'ensemble comprenant l'armature 280, le stator 251, et la vis 230. Optionnellement, on peut adapter l'ensemble comprenant le membre d'action 207 et l'écrou 240 pour placer le centre de gravité de cet ensemble sur l'axe de rotation X213, ce qui permet également de limiter les phénomènes vibratoires indésirables.

Dans le cas illustré sur la figure 5, le centre de gravité 290 est situé au point de concours des axes X251 et X232, de sorte que les axes X251 et X232 sont sécants.

En variante, les axes X251 et X232 sont sécants, même si l'axe X251 ne traverse pas le centre de gravité 290.

L'écrou 240 est lié hélicoïdalement avec la vis autour et le long de l'axe X232, par l'intermédiaire des éléments roulants du système 221. L'écrou 240 est mobile entre les extrémités 235 et 236, selon un mouvement de translation le long de l'axe X232, concomitant avec la rotation de la vis 230 autour de l'axe X232. Ainsi, l'écrou 240 est mobile au sein de l'armature 280, entre les branches 281, 282, 283 et 284.

Le membre d'action 207 comprend un corps principal 285, ainsi que deux bras 286 et 287 parallèles et disposés en fourche. Le membre d'action 207 est attaché au support du dispositif 201 via le corps principal 285, qui est traversé par l'axe X213. Les bras 286 et 287 sont fixement attachés au corps principal en s'étendant respectivement dans deux plans orthogonaux par rapport à l'axe X213. L'écrou 240 et la branche 281 de l'armature 280 sont positionnés entre les deux bras 286 et 287. En d'autres termes, les bras 286 et 287 enfourchent l'écrou 240 en étant disposés de part et d'autre de ce dernier.

Dans ce troisième mode de réalisation, l'écrou 240 est attaché au membre 207 par l'intermédiaire d'une seule liaison pivot 288 du dispositif 201, de façon à être libre en rotation par rapport au membre 207 autour d'un axe d'écrou X288. Par « une seule liaison pivot », on entend qu'il n'existe pas, outre la liaison 288, de liaison supplémentaire ou de membre intermédiaire tel qu'une bielle, par l'intermédiaire duquel le membre 207 est attaché à l'écrou 240. La liaison 288 relie donc elle-seule l'écrou 240 au membre 207. L'axe X288 est parallèle à l'axe X213 et à l'axe X251 et est orthogonale à l'axe X232. Les axes X288 et X232 sont sécants. La liaison pivot 288 comprend deux parties 289 et 290 coaxiales, respectivement montées sur les bras 286 et 287. Chaque partie 289 et 290 comprend préférentiellement un palier à éléments roulants.

La liaison 288 a une fonction de blocage en rotation de l'écrou 240 autour de l'axe X232 par rapport au stator 251.

Dans le dispositif 201, contrairement aux dispositifs 1 et 101, il n'est pas nécessaire de prévoir une bielle pour lier le membre 207 à l'écrou 240, de sorte que le dispositif 201 est à la fois compact et facile à fabriquer. En effet, seule la liaison pivot 288 est nécessaire pour lier le membre 207 à l'écrou 240, cette liaison 288 autorisant une rotation relative de l'écrou 240 et du membre 207. Cela est rendu possible grâce à la possibilité offerte au stator 251 de pivoter autour de l'axe X251 par rapport au support.

Dans une orientation neutre par rapport au support, le membre 207 est préférentiellement perpendiculaire à l'axe X232.

De préférence, le membre d'action 407 ne comprend pas davantage de liaisons que les liaisons 213 et 288 susmentionnées.

De préférence, l'écrou 240 ne comprend pas davantage de liaisons que la liaison 288 et la liaison avec la vis 230 susmentionnées.

De préférence, le stator 251 ne comprend pas davantage de degrés de liberté par rapport au support que son degré de liberté en rotation autour de l'axe X251.

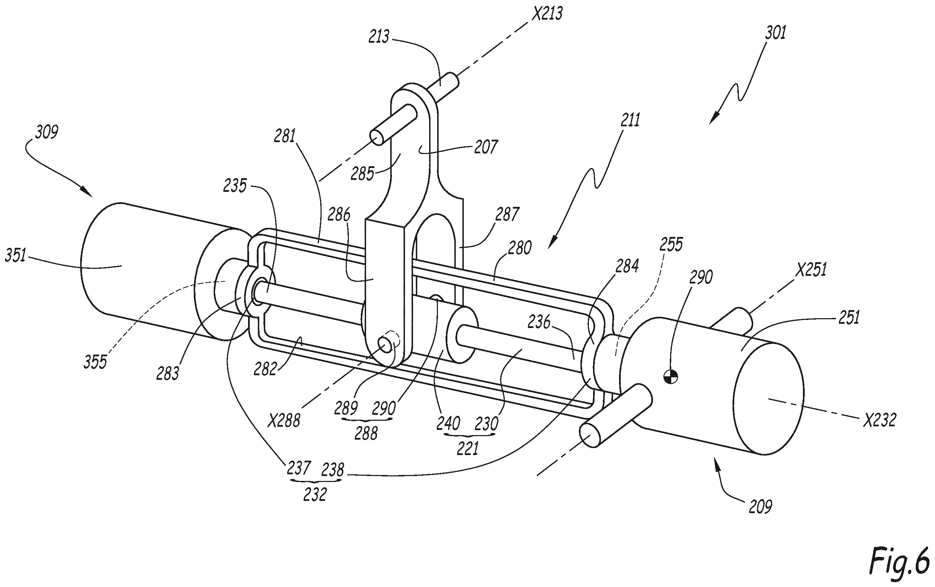

Dans le quatrième mode de réalisation de la figure 6, le dispositif 301, qui est par ailleurs similaire en tous points au dispositif 201 du mode de réalisation de la figure 5, comprend en outre un dispositif rotatif 309, en plus du dispositif rotatif 209 déjà prévu pour le mode de réalisation de la figure 5. Le dispositif rotatif 309 comprend un stator 351 et un rotor 355 dissimulé par le stator 351 sur la figure 6. Le rotor 355 est attaché au stator 351 en étant libre en rotation par rapport au stator 351 autour de l'axe X232. Le rotor 355 est également lié en rotation avec la vis 230 autour de l'axe X232, via l'extrémité 235, c'est-à-dire à l'opposé du rotor 255 par rapport à la vis 230. Le stator 351 est fixé à la branche 283 de l'armature 280, c'est-à-dire à l'opposé du stator 251 par rapport à l'armature 280. Le dispositif 309 comprend également un moyen d'application d'un couple de sensation d'efforts de la rotation du rotor 355 par rapport au stator 251 autour de l'axe X232. Ainsi, le dispositif 309 est complémentaire au dispositif 209, en ce qu'ils appliquent tous deux un couple de sensation d'effort sur la vis 230.

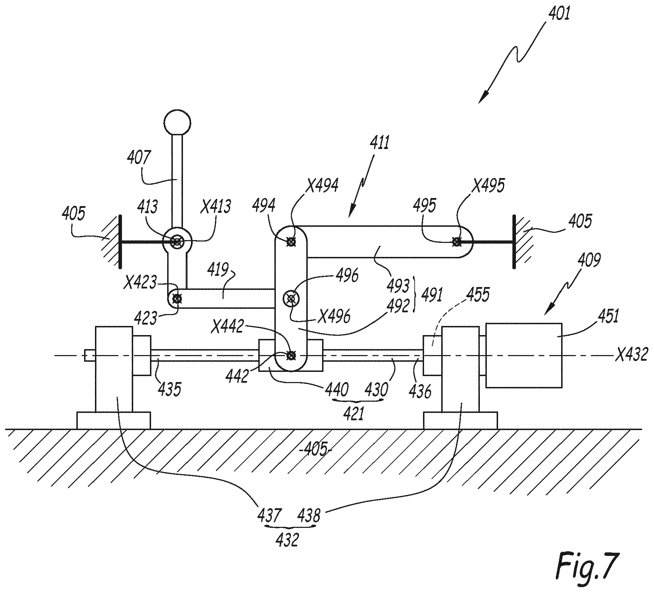

La figure 7 illustre un dispositif de sensation d'efforts 401 selon un cinquième mode de réalisation, qui présente des caractéristiques similaires à celles du dispositif 1 du premier mode de réalisation illustré sur les figures 1 et 2. Les caractéristiques similaires du premier et du cinquième mode de réalisation sont désignées par des numéros de référence augmentés de 400 pour le dispositif de sensation d'efforts 401, par rapport au dispositif de sensation d'efforts 1.

Le dispositif de sensation d'efforts 401 est conçu pour équiper un aéronef, au sein d'une commande de vol. De préférence, le dispositif 401 est intégré à une commande d'aéronef en formant un équipement de type mini-manche.

La figure 7 est une représentation schématique du dispositif 401, qui a vocation à illustrer seulement les caractéristiques de la cinématique de ce dispositif 401. La forme des différentes pièces du dispositif 401 peut être adaptée en fonction de l'application réelle qui sera faite de ce dispositif 401, notamment de façon à ce que ces pièces soient résistantes aux contraintes mécaniques et à toute autre contrainte s'appliquant sur elles.

Le dispositif 401, comprend un support 405 et un membre d'action 407, qui est attaché au support 405 en étant libre en rotation autour d'un axe primaire X413, via une liaison pivot 413.

Le dispositif 401 comprend également un dispositif rotatif 409, comprenant un stator 451, qui est fixement attaché au support 405, et un rotor 455, qui est attaché au stator 451 en étant libre en rotation par rapport au stator 451 autour d'un axe secondaire X432. Le dispositif 409 comprend un moyen d'application d'un couple de sensation d'efforts de la rotation du rotor 455 par rapport au stator 451 autour de l'axe secondaire X432, ce moyen étant préférentiellement enfermé dans le stator 451.

Le dispositif 401 comprend également un réducteur mécanique 411, qui lie, avec un rapport de réduction, la rotation du membre d'action 407 par rapport au support 405 autour de l'axe primaire X413, avec la rotation du rotor 455 par rapport au stator 451 autour de l'axe secondaire X432.

Plus précisément, le réducteur mécanique comprend une bielle 419, un compas anti-rotation 491 et un système vis-écrou 421 à éléments roulants, le système 421 comprenant une vis 430, qui est attachée au rotor 455 à une extrémité 436 de la vis 430. La vis 430 est en rotation avec le rotor 455 autour de l'axe secondaire X432 par son extrémité 436. La vis 430 est également attachée au support 405 à l'aide d'une liaison pivot 432, comprenant une première partie 437 supportant une extrémité 435 de la vis 430, opposée à l'extrémité 436, et une deuxième partie 438 supportant l'extrémité 436. Le stator 451 est fixé au support 405 via la partie 438 et se situe ainsi à l'extrémité 436 de la vis 430.

Le système 421 comprend un écrou 440 renfermant les éléments roulants du système 421. L'écrou 440 est lié hélicoïdalement avec la vis 430 autour et le long de l'axe secondaire X432, par l'intermédiaire des éléments roulants.

Le membre d'action 407 est lié à l'écrou 440 par l'intermédiaire de la bielle 419, qui est attachée au membre d'action par une liaison pivot 423, et par l'intermédiaire du compas 491, qui est attaché à l'écrou 440 par une liaison pivot 442. Ainsi, la bielle 419 est libre en rotation par rapport au membre d'action 407, autour d'un axe X423 de la liaison pivot 423, l'axe X423 étant parallèle à l'axe X413.

Le compas 491 comprend un bras 492 et un bras 493, liés entre eux par une liaison pivot 494, dont l'axe X494 est parallèle à l'axe X413, de façon à être libres en rotation l'un par rapport à l'autre autour de cet axe X413. La liaison 494 est située à une première extrémité du bras 492 et à une première extrémité du bras 493. Le bras 493 est également lié au support 405 par une liaison pivot 495, dont l'axe X495 est parallèle à l'axe X494, et donc à l'axe X413. Ainsi, le bras 493 est libre en rotation par rapport au support 405 autour de l'axe X495. La liaison 495 est située à une deuxième extrémité du bras 493, opposée à la première extrémité susmentionnée de ce bras 493. Les axes X413 et X495 sont préférentiellement situés à égale distance de l'axe X432, en étant disposés du même côté de cet axe X432 dans un plan orthogonal à l'axe X413.

La liaison pivot 442 est située à une deuxième extrémité du bras 492, opposée à la première extrémité susmentionnée de ce bras 492. Le bras 492 est donc lié à l'écrou 440 via la liaison 442, en étant libre en rotation par rapport à cet écrou 440 autour d'un axe X442 de la liaison 442. L'axe X442 est parallèle à l'axe X494 et à l'axe X413. On prévoit que l'axe X442 et l'axe X432 sont sécants et orthogonaux.

La bielle 419 est attachée au bras 492 par une liaison pivot 496, de façon à être libre en rotation par rapport au bras 492 autour d'un axe X496 de la liaison 496, parallèle à l'axe X423 et donc à l'axe X413. Les liaisons 423 et 496 sont situées aux extrémités opposées de la bielle 419. La liaison 496 est située entre les liaisons 494 et 442 sur le bras 492, de préférence à équidistance.

Dans ce mode de réalisation, le blocage en rotation de l'écrou 440 par rapport au support 405, autour de l'axe X432, est réalisé grâce au compas 491.

La bielle 419, ainsi que les bras 492 et 493 du dispositif 401 présentent chacun une forme rectiligne ou longitudinale. Lorsque le membre 407 est orienté de façon perpendiculaire à la vis 430, ce qui est préférentiellement le cas lorsque la commande de vol est au neutre, comme c'est le cas sur la figure 7, la bielle 419 est parallèle à la vis 430. Dans cette situation, le bras 492 est perpendiculaire à la vis 430 et à la bielle 419. Dans cette situation, le bras 493 est parallèle à la vis 430 et à la bielle 419. Dans cette situation, l'écrou 440 est situé à mi-course entre les extrémités 435 et 436 de la vis 430.

Le bras 492 comportant des liaisons pivot 442, 494 et 496, dont l'axe respectif est mobile par rapport au support 405, et ne comportant aucune liaison pivot dont l'axe est fixe par rapport au support 405, le bras 492 peut être considéré comme une bielle. Le bras 493 peut être considéré comme un levier, puisqu'il comporte une liaison pivot 495 dont l'axe est fixe par rapport au support 405.

Dans le présent mode de réalisation, la mise en œuvre d'une bielle avec des bras disposés en fourche est avantageuse pour des raisons de rigidité et de compacité. Toutefois, on pourrait envisager une bielle sans fourche afin de simplifier et de rendre moins coûteux le dispositif de sensation d'effort. En fonctionnement, lorsque le membre 407 est pivoté autour de l'axe X413, le compas anti-rotation 491 a pour fonction de compenser les défauts de linéarité de la transmission, par l'intermédiaire de la bielle 419, de l'action du membre 407 à l'écrou 440. Pour cela, il se produit une variation de l'orientation du bras 493 par rapport au support 405, quoique relativement faible au regard de la variation de l'orientation du membre 407. Grâce à cette configuration, le membre 407 peut être pivoté sur un secteur angulaire relativement important autour de l'axe X413, à partie de son orientation neutre, sans variation importante du rapport de réduction entre l'orientation du membre 407 et la position de l'écrou 440 par rapport au support 405.

De plus, dans le cas de la figure 7, la bielle 419 est située parallèlement à la vis 430, et non pas à hauteur de cette dernière comme c'est le cas pour le mode de réalisation des figures 1 et 2, de sorte que la conception de la bielle 419 est simplifiée. En particulier, il n'est pas nécessaire de prévoir une forme en « H » ou en fourche incluant des bras de grande longueur, tels que les bras 45 et 46 du mode de réalisation des figures 1 et 2.

Le compas 491 ayant un rôle anti-rotation de l'écrou 440 autour de l'axe X432 par rapport au support 405, les contraintes liées à la tendance à la rotation de l'écrou 440 ne sont pas ou peu transmises à la bielle 419, dont le travail est exclusivement ou quasi-exclusivement en traction ou en compression entre ses deux seules liaisons pivot 423 et 496. Le bras 492, quand à lui, travaille exclusivement ou quasi-exclusivement en flexion.

En variante, on adapte à l'application les rapports de longueur entre les différentes liaisons 423, 442, 494, 495 et 496, ainsi que leur position par rapport au support 405 et les unes par rapport aux autres.

De façon préférentielle, la distance entre les liaisons 423 et 496 est égale à la distance entre les liaisons 494 et 495 et à la distance entre les liaisons 494 et 442, mesurées dans le plan de la figure 7, orthogonal à l'axe X413.

De préférence, le membre 407 ne comprend pas davantage de liaisons que les liaisons 413 et 423 susmentionnées.

De préférence, la bielle 419 ne comprend pas davantage de liaisons que les liaisons 423 et 496 susmentionnées.

De préférence, le compas 491 ne comprend pas davantage de liaisons que les liaisons 442, 494, 495 et 496 susmentionnées.

De préférence, l'écrou 440 ne comprend pas davantage de liaisons que la liaison 442 et que la liaison avec la vis 30 susmentionnées.

De préférence, les liaisons 413, 423, 496, 494 et 495 sont disposées d'un même côté par rapport à l'axe X432 et pas de part et d'autre de cet axe X432.

Dans le mode de réalisation de la figure 7 le bras 493 constitue le levier du compas anti-rotation 491, car le bras 493 est lié au support 405 par la liaison 495. Le bras 492 constitue la bielle du compas anti-rotation 491, en étant lié au bras 493 par la liaison 494. L'écrou 440 constitue l'élément subséquent empêché en rotation par le compas 491, car il est attaché à la liaison 442 du bras 492, qui est la troisième liaison pivot du compas anti-rotation 491.

Dans le mode de réalisation de la figure 7, un autre compas anti-rotation que le compas anti-rotation 491 est obtenu : en effet, le membre 407, attaché par la liaison pivot 413 au support 405, constitue le levier du compas, alors que la bielle 419 constitue la bielle du compas, puisque la bielle 419 est attachée au membre 407 via la liaison pivot 423 et est attachée à un élément subséquent, le bras 492, via une troisième liaison pivot 496.

Dans les modes de réalisation des figures 1-4 et 7, l'écrou 40, 140 ou 440 du réducteur mécanique est empêché en rotation autour de l'axe secondaire X32, X132 ou X432 en étant directement attaché à un compas antirotation, par l'intermédiaire de la troisième liaison pivot 42, 142 ou 442 de ce compas anti-rotation, sans autre intermédiaire.

Les caractéristiques de chaque mode de réalisation et variantes définis ci-avant peuvent être appliquées à tous les modes de réalisation et variantes définis ci-avant, pour autant que techniquement possible.

## Revendications

1. Dispositif de sensation d'efforts (1; 101) pour une commande de vol (3) d'un aéronef, le dispositif de sensation d'efforts comprenant :
- un support (5),
- un membre d'action (7; 107), qui est attaché au support en étant libre en rotation autour d'un axe primaire (X13; X113),
- un dispositif rotatif (9; 109), comprenant un stator (51; 151), qui est attaché au support en étant lié en rotation au support autour d'un axe secondaire (X32; X132), et un rotor (55; 155), qui est attaché au stator en étant libre en rotation par rapport au stator autour de l'axe secondaire, le dispositif rotatif étant conçu pour appliquer un couple de sensation d'efforts sur le rotor, par rapport au stator, autour de l'axe secondaire, et
- un réducteur mécanique (11; 111), qui lie, avec un rapport de réduction, la rotation du membre d'action par rapport au support autour de l'axe primaire, avec la rotation du rotor par rapport au stator autour de l'axe secondaire,
le réducteur mécanique (11; 111) comprenant un système vis-écrou (21; 121) à éléments roulants, qui comprend :
- une vis (30; 130), qui est attachée au rotor (55; 155) en étant liée en rotation au rotor autour de l'axe secondaire (X32; X132), et
- un écrou (40; 140), qui est :
∘ fixe en rotation autour de l'axe secondaire par rapport au stator (51; 151), et
∘ lié hélicoïdalement avec la vis autour et le long de l'axe secondaire, par l'intermédiaire des éléments roulants,
le réducteur mécanique (11; 111) comprenant une bielle (19; 119) liant le membre d'action (7; 107) à l'écrou (40; 140), la bielle étant attachée au membre d'action, de préférence à l'aide d'une première liaison pivot (23 ; 123) qui relie elle-seule la bielle au membre d'action, de sorte que la bielle est libre en rotation par rapport au membre d'action autour d'un premier axe de bielle (X23; X123) parallèle à l'axe primaire (X13; X113),
la bielle (19 ; 119) étant attachée à l'écrou, à l'aide d'une deuxième liaison pivot (42 ; 142) qui relie la bielle à l'écrou, de sorte que la bielle est libre en rotation par rapport à l'écrou autour d'un deuxième axe de bielle (X42; X142) parallèle à l'axe primaire et orthogonal à l'axe secondaire (X32; X132), la bielle formant avec le membre d'action un premier compas anti-rotation pour fixer l'écrou en rotation autour de l'axe secondaire par rapport au stator,
**caractérisé en ce que** la deuxième liaison pivot (42 ; 142) relie elle-seule la bielle (19 ; 119) à l'écrou (40).

2. Dispositif de sensation d'efforts (1 ; 101) selon la revendication 1, **caractérisé en ce que** la bielle (19; 119) comprend deux bras (45, 46 ; 145, 146) disposés en fourche, par l'intermédiaire desquels la bielle est attachée à l'écrou (40; 140) en étant libre en rotation par rapport à l'écrou autour du deuxième axe de bielle, les bras s'étendant de part et d'autre de l'écrou.

3. Dispositif de sensation d'efforts (1 ; 101) selon la revendication 2, **caractérisé en ce que** le deuxième axe de bielle (X42; X142) et l'axe secondaire (X32; X132) sont sécants.

4. Dispositif de sensation d'efforts (401) pour une commande de vol (3) d'un aéronef, le dispositif de sensation d'efforts comprenant :
- un support (405),
- un membre d'action (407), qui est attaché au support en étant libre en rotation autour d'un axe primaire (X413),
- un dispositif rotatif (409), comprenant un stator (451), qui est attaché au support en étant lié en rotation au support autour d'un axe secondaire (X432), et un rotor (455), qui est attaché au stator en étant libre en rotation par rapport au stator autour de l'axe secondaire, le dispositif rotatif étant conçu pour appliquer un couple de sensation d'efforts sur le rotor, par rapport au stator, autour de l'axe secondaire, et
- un réducteur mécanique (411), qui lie, avec un rapport de réduction, la rotation du membre d'action par rapport au support autour de l'axe primaire, avec la rotation du rotor par rapport au stator autour de l'axe secondaire,
le réducteur mécanique (411) comprenant un système vis-écrou (421) à éléments roulants, qui comprend :
- une vis (430), qui est attachée au rotor (455) en étant liée en rotation au rotor autour de l'axe secondaire (X432), et
- un écrou (440), qui est :
∘ fixe en rotation autour de l'axe secondaire par rapport au stator (451), et
∘ lié hélicoïdalement avec la vis autour et le long de l'axe secondaire, par l'intermédiaire des éléments roulants,
le réducteur mécanique (411) comprenant une bielle (419) liant le membre d'action (407) à l'écrou (440), la bielle étant attachée au membre d'action, de préférence à l'aide d'une première liaison pivot (423) qui relie elle-seule la bielle au membre d'action, de sorte que la bielle est libre en rotation par rapport au membre d'action autour d'un premier axe de bielle (X423) parallèle à l'axe primaire (X413),
la bielle (419) étant attachée à l'écrou, à l'aide d'une deuxième liaison pivot qui relie la bielle à l'écrou, de sorte que la bielle est libre en rotation par rapport à l'écrou autour d'un deuxième axe de bielle (X496) parallèle à l'axe primaire et orthogonal à l'axe secondaire (X432), la bielle formant avec le membre d'action un premier compas anti-rotation pour fixer l'écrou en rotation autour de l'axe secondaire par rapport au stator, **caractérisé en ce que** :
- le dispositif de sensation d'efforts comprend un deuxième compas anti-rotation (491), configuré pour bloquer en rotation l'écrou (440) par rapport au support (405) autour de l'axe secondaire (X432), et
- la bielle (419) est attachée au deuxième compas anti-rotation (491) de façon à être liée à l'écrou (440) par l'intermédiaire du deuxième compas anti-rotation (491).

5. Dispositif de sensation d'efforts (401) selon la revendication 4, **caractérisé en ce que** le deuxième compas antirotation (491) comprend :
- un premier bras (492) :
∘ qui est attaché à l'écrou (440) par une troisième liaison pivot (442), dont l'axe (X442) est parallèle à l'axe primaire (X413) et sécant avec l'axe secondaire (X432), de sorte que le premier bras (492) est libre en rotation par rapport à l'écrou (440) autour de l'axe (X442) de la troisième liaison pivot (442), et
∘ qui est attaché à la bielle (419) par la deuxième liaison pivot (496), de sorte que le premier bras est libre en rotation par rapport à la bielle autour de l'axe (X496) de la deuxième liaison pivot,
- un deuxième bras (493) :
∘ qui est attaché au premier bras (492) par une quatrième liaison pivot (494), dont l'axe (X494) est parallèle à l'axe primaire (X413), de sorte que le premier bras et le deuxième bras sont libres en rotation l'un par rapport à l'autre autour de l'axe (X494) de la quatrième liaison pivot, et
∘ qui est attaché au support (405) par une cinquième liaison pivot (495), dont l'axe (X495) est parallèle à l'axe primaire (X413), de sorte que le deuxième bras (493) est libre en rotation par rapport au support (405) autour de l'axe (X495) de la cinquième liaison pivot (495).

6. Dispositif de sensation d'efforts (1; 101; 401) selon l'une quelconque des revendications précédentes, **caractérisé en ce que** le stator (51; 151; 451) est fixement attaché au support (5 ; 105; 405).

7. Dispositif de sensation d'efforts (201 ; 301) pour une commande de vol (3) d'un aéronef, le dispositif de sensation d'efforts comprenant :
- un support,
- un membre d'action (207), qui est attaché au support en étant libre en rotation autour d'un axe primaire (X213),
- un dispositif rotatif (209), comprenant un stator (251), qui est attaché au support en étant lié en rotation au support autour d'un axe secondaire (X232), et un rotor (255), qui est attaché au stator en étant libre en rotation par rapport au stator autour de l'axe secondaire, le dispositif rotatif étant conçu pour appliquer un couple de sensation d'efforts sur le rotor, par rapport au stator, autour de l'axe secondaire, et
- un réducteur mécanique (211), qui lie, avec un rapport de réduction, la rotation du membre d'action par rapport au support autour de l'axe primaire, avec la rotation du rotor par rapport au stator autour de l'axe secondaire,
le réducteur mécanique (211) comprenant un système vis-écrou (221) à éléments roulants, qui comprend :
- une vis (230), qui est attachée au rotor (255) en étant liée en rotation au rotor autour de l'axe secondaire (X232), et
- un écrou (240), qui est :
∘ fixe en rotation autour de l'axe secondaire par rapport au stator (251), et
∘ lié hélicoïdalement avec la vis autour et le long de l'axe secondaire, par l'intermédiaire des éléments roulants,
**caractérisé en ce que** le stator (251) est attaché au support en étant libre en rotation autour d'un axe de stator (X251) par rapport au support, l'axe de stator étant parallèle à l'axe primaire (X213).

8. Dispositif de sensation d'efforts (201 ; 301) selon la revendication 7, **caractérisé en ce que** :
- la vis (230) présente deux extrémités (235, 236) par l'intermédiaire desquelles elle est attachée à une armature (280) du dispositif de sensation d'efforts, en étant libre en rotation autour de l'axe secondaire (X232) par rapport à l'armature, l'armature étant fixée au stator (251), l'écrou (240) étant mobile au sein de l'armature, entre les deux extrémités de la vis, et
- un ensemble solidaire, comprenant la vis, le stator et l'armature, présente un centre de gravité (290) traversé par l'axe de stator.

9. Dispositif de sensation d'efforts (201 ; 301) selon la revendication 7 ou 8, **caractérisé en ce que** le membre d'action (207) est attaché à l'écrou (240) par l'intermédiaire d'une liaison pivot (288) du dispositif de sensation d'efforts, qui relie elle-seule le membre d'action à l'écrou, de sorte que le membre d'action est libre en rotation par rapport à l'écrou autour d'un axe d'écrou (X288) parallèle à l'axe primaire (X213) et orthogonal à l'axe secondaire (X232).

10. Dispositif de sensation d'efforts (101) selon l'une quelconque des revendications précédentes, **caractérisé en ce que** le dispositif de sensation d'efforts comprend un système de galets (166, 167) et de rails (168, 169) assurant un blocage de la rotation de l'écrou (140) autour de l'axe secondaire (X132) par rapport au stator (151).

11. Dispositif de sensation d'efforts (1; 101; 201; 301; 401) selon l'une quelconque des revendications précédentes, **caractérisé en ce que** le dispositif rotatif (9; 109; 209; 409) est une génératrice électrique, un moteur électrique, ou un dispositif magnéto-rhéologique.

12. Commande de vol (3) d'un aéronef, la commande de vol comprenant un dispositif de sensation d'efforts (1; 101; 201; 301; 401) conforme à l'une quelconque des revendications précédentes, ainsi qu'un organe de commande (2) actionnable à la main ou au pied, et lié en rotation avec le membre d'action (7; 107; 207; 407) autour de l'axe primaire (X13; X113; X213; X413).

## Patentansprüche

1. Krafteindrucksvorrichtung (1; 101) für eine Flugsteuerung (3) eines Luftfahrzeugs, wobei die Krafteindrucksvorrichtung umfasst:
- eine Halterung (5),
- ein Betätigungsglied (7; 107), das so an der Halterung angebracht ist, dass es frei um eine Primärachse (X13; X113) drehen kann,
- eine Drehvorrichtung (9; 109), die einen Stator (51; 151), der so an der Halterung angebracht ist, dass er um eine Sekundärachse (X32; X132) drehend mit der Halterung verbunden ist, und einen Rotor (55; 155) umfasst, der so am Stator angebracht ist, dass er in Bezug auf den Stator frei um die Sekundärachse drehen kann, wobei die Drehvorrichtung dafür konzipiert ist, ein Krafteindrucksmoment an den Rotor in Bezug auf den Stator um die Sekundärachse anzulegen, und
- eine mechanische Untersetzung (11; 111), die mit einem Untersetzungsverhältnis die Drehung des Betätigungsglieds in Bezug auf die Halterung um die Primärachse mit der Drehung des Rotors in Bezug auf den Stator um die Sekundärachse verbindet,
wobei die mechanische Untersetzung (11; 111) ein Spindel-Mutter-System (21; 121) mit Wälzelementen umfasst, umfassend:
- eine Spindel (30; 130), die so am Rotor (55; 155) angebracht ist, dass sie um die Sekundärachse (X32; X132) drehend mit dem Rotor verbunden ist, und
- eine Mutter (40; 140), die:
-- in Bezug auf den Stator (51; 151) um die Sekundärachse drehfest ist, und
-- mittels der Wälzelemente um die Sekundärachse und entlang derselben schraubenförmig mit der Spindel verbunden ist,
wobei die mechanische Untersetzung (11; 111) einen Pleuel (19; 119) umfasst, der das Betätigungsglied (7; 107) mit der Mutter (40; 140) verbindet, wobei der Pleuel vorzugsweise mit Hilfe einer ersten Schwenkverbindung (23; 123), die ihrerseits alleine den Pleuel mit dem Betätigungsglied verbindet, derart am Betätigungsglied angebracht ist, dass der Pleuel in Bezug auf das Betätigungsglied frei um eine erste Pleuelachse (X23; X123) drehen kann, die zur Primärachse (X13; X113) parallel ist,
wobei der Pleuel (19; 119) mit Hilfe einer zweiten Schwenkverbindung (42; 142), die den Pleuel mit der Mutter verbindet, derart an der Mutter angebracht ist, dass der Pleuel in Bezug auf die Mutter frei um eine zweite Pleuelachse (X42; X142) drehen kann, die zur Primärachse parallel und zur Sekundärachse (X32; X132) orthogonal ist, wobei der Pleuel mit dem Betätigungsglied einen ersten Drehsicherungszirkel bildet, um die Mutter in Bezug auf den Stator um die Sekundärachse drehfest zu befestigen,
**dadurch gekennzeichnet, dass** die zweite Schwenkverbindung (42; 142) ihrerseits alleine den Pleuel (19; 119) mit der Mutter (40) verbindet.

2. Krafteindrucksvorrichtung (1; 101) nach Anspruch 1, **dadurch gekennzeichnet, dass** der Pleuel (19; 119) zwei als Gabel angeordnete Arme (45, 46; 145, 146) umfasst, mittels denen der Pleuel so an der Mutter (40; 140) angebracht ist, dass er in Bezug auf die Mutter frei um die zweite Pleuelachse drehen kann, wobei sich die Arme beidseits der Mutter erstrecken.

3. Krafteindrucksvorrichtung (1; 101) nach Anspruch 2, **dadurch gekennzeichnet, dass** sich die zweite Pleuelachse (X42; X142) und die Sekundärachse (X32; X132) schneiden.

4. Krafteindrucksvorrichtung (401) für eine Flugsteuerung (3) eines Luftfahrzeugs, wobei die Krafteindrucksvorrichtung umfasst:
- eine Halterung (405),
- ein Betätigungsglied (407), das so an der Halterung angebracht ist, dass es frei um eine Primärachse (X413) drehen kann,
- eine Drehvorrichtung (409), die einen Stator (451), der so an der Halterung angebracht ist, dass er um eine Sekundärachse (X432) drehend mit der Halterung verbunden ist, und einen Rotor (455) umfasst, der so am Stator angebracht ist, dass er in Bezug auf den Stator frei um die Sekundärachse drehen kann, wobei die Drehvorrichtung dafür konzipiert ist, ein Krafteindrucksmoment an den Rotor in Bezug auf den Stator um die Sekundärachse anzulegen, und
- eine mechanische Untersetzung (411), die mit einem Untersetzungsverhältnis die Drehung des Betätigungsglieds in Bezug auf die Halterung um die Primärachse mit der Drehung des Rotors in Bezug auf den Stator um die Sekundärachse verbindet,
wobei die mechanische Untersetzung (411) ein Spindel-Mutter-System (421) mit Wälzelementen umfasst, umfassend:
- eine Spindel (430), die so am Rotor (455) angebracht ist, dass sie um die Sekundärachse (X432) drehend mit dem Rotor verbunden ist, und
- eine Mutter (440), die:
-- in Bezug auf den Stator (451) um die Sekundärachse drehfest ist, und
-- mittels der Wälzelemente um die Sekundärachse und entlang derselben schraubenförmig mit der Spindel verbunden ist,
wobei die mechanische Untersetzung (411) einen Pleuel (419) umfasst, der das Betätigungsglied (407) mit der Mutter (440) verbindet, wobei der Pleuel vorzugsweise mit Hilfe einer ersten Schwenkverbindung (423), die ihrerseits alleine den Pleuel mit dem Betätigungsglied verbindet, derart am Betätigungsglied angebracht ist, dass der Pleuel in Bezug auf das Betätigungsglied frei um eine erste Pleuelachse (X423) drehen kann, die zur Primärachse (X413) parallel ist,
wobei der Pleuel (419) mit Hilfe einer zweiten Schwenkverbindung, die den Pleuel mit der Mutter verbindet, derart an der Mutter angebracht ist, dass der Pleuel in Bezug auf die Mutter frei um eine zweite Pleuelachse (X496) drehen kann, die zur Primärachse parallel und zur Sekundärachse (X432) orthogonal ist, wobei der Pleuel mit dem Betätigungsglied einen ersten Drehsicherungszirkel bildet, um die Mutter in Bezug auf den Stator um die Sekundärachse drehfest zu befestigen, **dadurch gekennzeichnet, dass**:
- die Krafteindrucksvorrichtung einen zweiten Drehsicherungszirkel (491) umfasst, der dafür konfiguriert ist, die Mutter (440) in Bezug auf die Halterung (405) um die Sekundärachse (X432) gegen Drehung zu sperren, und
- der Pleuel (419) so am zweiten Drehsicherungszirkel (491) angebracht ist, dass er mittels des zweiten Drehsicherungszirkels (491) mit der Mutter (440) verbunden ist.

5. Krafteindrucksvorrichtung (401) nach Anspruch 4, **dadurch gekennzeichnet, dass** der zweite Drehsicherungszirkel (491) umfasst:
- einen ersten Arm (492):
-- der über eine dritte Schwenkverbindung (442), deren Achse (X442) zur Primärachse (X413) parallel ist und sich mit der Sekundärachse (X432) schneidet, derart an der Mutter (440) angebracht ist, dass der erste Arm (492) in Bezug auf die Mutter (440) frei um die Achse (X442) der dritten Schwenkverbindung (442) drehen kann, und
-- der über die zweite Schwenkverbindung (496) derart am Pleuel (419) angebracht ist, dass der erste Arm in Bezug auf den Pleuel frei um die Achse (X496) der zweiten Schwenkverbindung drehen kann,
- einen zweiten Arm (493):
-- der über eine vierte Schwenkverbindung (494), deren Achse (X494) zur Primärachse (X413) parallel ist, derart am ersten Arm (492) angebracht ist, dass der erste Arm und der zweite Arm in Bezug zueinander frei um die Achse (X494) der vierten Schwenkverbindung drehen können, und
-- der über eine fünfte Schwenkverbindung (495), deren Achse (X495) zur Primärachse (X413) parallel ist, derart an der Halterung (405) angebracht ist, dass der zweite Arm (493) in Bezug auf die Halterung (405) frei um die Achse (X495) der fünften Schwenkverbindung (495) drehen kann.

6. Krafteindrucksvorrichtung (1; 101; 401) nach einem der vorstehenden Ansprüche, **dadurch gekennzeichnet, dass** der Stator (51; 151; 451) fest an der Halterung (5; 105; 405) angebracht ist.

7. Krafteindrucksvorrichtung (201; 301) für eine Flugsteuerung (3) eines Luftfahrzeugs, wobei die Krafteindrucksvorrichtung umfasst:
- eine Halterung,
- ein Betätigungsglied (207), das so an der Halterung angebracht ist, dass es frei um eine Primärachse (X213) drehen kann,
- eine Drehvorrichtung (209), die einen Stator (251), der so an der Halterung angebracht ist, dass er um eine Sekundärachse (X232) drehend mit der Halterung verbunden ist, und einen Rotor (255) umfasst, der so am Stator angebracht ist, dass er in Bezug auf den Stator frei um die Sekundärachse drehen kann, wobei die Drehvorrichtung dafür konzipiert ist, ein Krafteindrucksmoment an den Rotor in Bezug auf den Stator um die Sekundärachse anzulegen, und
- eine mechanische Untersetzung (211), die mit einem Untersetzungsverhältnis die Drehung des Betätigungsglieds in Bezug auf die Halterung um die Primärachse mit der Drehung des Rotors in Bezug auf den Stator um die Sekundärachse verbindet,
wobei die mechanische Untersetzung (211) ein Spindel-Mutter-System (221) mit Wälzelementen umfasst, umfassend:
- eine Spindel (230), die so am Rotor (255) angebracht ist, dass sie um die Sekundärachse (X232) drehend mit dem Rotor verbunden ist, und
- eine Mutter (240), die:
-- in Bezug auf den Stator (251) um die Sekundärachse drehfest ist, und
-- mittels der Wälzelemente um die Sekundärachse und entlang derselben schraubenförmig mit der Spindel verbunden ist,
**dadurch gekennzeichnet, dass** der Stator (251) so an der Halterung angebracht ist, dass er in Bezug auf die Halterung frei um eine Statorachse (X251) drehen kann, wobei die Statorachse zur Primärachse (X213) parallel ist.

8. Krafteindrucksvorrichtung (201; 301) nach Anspruch 7, **dadurch gekennzeichnet, dass**:
- die Spindel (230) zwei Enden (235, 236) aufweist, mittels denen sie so an einem Rahmen (280) der Krafteindrucksvorrichtung angebracht ist, dass sie in Bezug auf den Rahmen frei um die Sekundärachse (X232) drehen kann, wobei der Rahmen am Stator (251) befestigt ist, wobei die Mutter (240) innerhalb des Rahmens zwischen den zwei Enden der Spindel beweglich ist, und
- eine fest verbundene Baugruppe, die die Spindel, den Stator und den Rahmen umfasst, einen Schwerpunkt (290) aufweist, durch den die Statorachse verläuft.

9. Krafteindrucksvorrichtung (201; 301) nach Anspruch 7 oder 8, **dadurch gekennzeichnet**, das das Betätigungsglied (207) mittels einer Schwenkverbindung (288) der Krafteindrucksvorrichtung, die ihrerseits alleine das Betätigungsglied mit der Mutter verbindet, derart an der Mutter (240) angebracht ist, dass das Betätigungsglied in Bezug auf die Mutter frei um eine Mutternachse (X288) drehen kann, die zur Primärachse (X213) parallel und zur Sekundärachse (X232) orthogonal ist.

10. Krafteindrucksvorrichtung (101) nach einem der vorstehenden Ansprüche, **dadurch gekennzeichnet, dass** die Krafteindrucksvorrichtung ein System aus Rollen (166, 167) und aus Schienen (168, 169) umfasst, das ein Sperren der Drehung der Mutter (140) in Bezug auf den Stator (151) um die Sekundärachse (X132) sicherstellt.

11. Krafteindrucksvorrichtung (1; 101; 201; 301; 401) nach einem der vorstehenden Ansprüche, **dadurch gekennzeichnet, dass** die Drehvorrichtung (9; 109; 209; 409) ein elektrischer Generator, ein Elektromotor oder eine magnetorheologische Vorrichtung ist.

12. Flugsteuerung (3) eines Luftfahrzeugs, wobei die Flugsteuerung eine Krafteindrucksvorrichtung (1; 101; 201; 301; 401) nach einem der vorstehenden Ansprüche sowie ein Steuerungsorgan (2) umfasst, das mit der Hand oder dem Fuß betätigt werden kann und um die Primärachse (X13; X113; X213; X413) drehend mit dem Betätigungsglied (7; 107; 207; 407) verbunden ist.

## Claims

1. A force sensing device (1; 101) for a flight control (3) of an aircraft, the force sensing device comprising:
- a support (5),
- an action member (7; 107), which is attached to the support while being free to rotate about a primary axis (X13; X113),
- a rotary device (9; 109), comprising a stator (51; 151), which is attached to the support while being secured in rotation to the support about a secondary axis (X32; X132), and a rotor (55; 155), which is attached to the stator while being free to rotate relative to the stator about the secondary axis, the rotary device being designed so as to apply a force sensing torque on the rotor, relative to the stator, about the secondary axis, and
- a mechanical reducer (11; 111), which relates, with a reduction ratio, the rotation of the action member relative to the support about the primary axis, with the rotation of the rotor relative to the stator about the secondary axis,
the mechanical reducer (11; 111) comprising a screw-nut system (21; 121) with rolling elements, which comprises:
- a screw (30; 130), which is attached to the rotor (55; 155) while being secured in rotation to the rotor about the secondary axis (X32; X132), and
- a nut (40; 140), which is:
∘ fixed in rotation about the secondary axis relative to the stator (51; 151), and
∘ helically linked with the screw about and along the secondary axis, via the rolling elements,
the mechanical reducer (11; 111) comprising a connecting rod (19; 119) linking the action member (7; 107) to the nut (40; 140), the connecting rod being attached to the action member, preferably using a first pivot connection (23; 123) which alone connects the connecting rod to the action member, so that the connecting rod is free to rotate relative to the action member about a first connecting rod axis (X23; X123) parallel to the primary axis (X13; X113),
the connecting rod (19; 119) being attached to the nut, using a second pivot connection (42; 142) which connects the connecting rod to the nut, so that the connecting rod is free to rotate relative to the nut about a second connecting rod axis (X42; X142) parallel to the primary axis and orthogonal to the secondary axis (X32; X132), the connecting rod forming with the action member a first anti-rotation compass to fasten the nut in rotation about the secondary axis relative to the stator,
**characterized in that** the second pivot connection (42; 142) alone connects the connecting rod (19; 119) to the nut (40).

2. The force sensing device (1; 101) according to claim 1, **characterized in that** the connecting rod (19; 119) comprises two arms (45, 46; 145, 146) disposed in a fork-like fashion, through which the connecting rod is attached to the nut (40; 140) while being free to rotate relative to the nut about the second connecting rod axis, the arms extending on either side of the nut.

3. The force sensing device (1; 101) according to claim 2, **characterized in that** the second connecting rod axis (X42; X142) and the secondary axis (X32; X132) intersect each other.

4. The force sensing device (401) for a flight control (3) of an aircraft, the force sensing device comprising:
- a support (405),
- an action member (407), which is attached to the support while being free to rotate about a primary axis (X413),
- a rotary device (409), comprising a stator (451), which is attached to the support while being secured in rotation to the support about a secondary axis (X432), and a rotor (455), which is attached to the stator while being free to rotate relative to the stator about the secondary axis, the rotary device being designed so as to apply a force sensing torque on the rotor, relative to the stator, about the secondary axis, and
- a mechanical reducer (411), which relates, with a reduction ratio, the rotation of the action member relative to the support about the primary axis, with the rotation of the rotor relative to the stator about the secondary axis,
the mechanical reducer (411) comprising a screw-nut system (421) with rolling elements, which comprises:
- a screw (430), which is attached to the rotor (455) while being secured in rotation to the rotor about the secondary axis (X432), and
- a nut (440), which is:
∘ fixed in rotation about the secondary axis relative to the stator (451), and
∘ helically linked with the screw about and along the secondary axis, via the rolling elements,
the mechanical reducer (411) comprising a connecting rod (419) linking the action member (407) to the nut (440), the connecting rod being attached to the action member, preferably using a first pivot connection (423) which alone connects the connecting rod to the action member, so that the connecting rod is free to rotate relative to the action member about a first connecting rod axis (X423) parallel to the primary axis (X413),
the connecting rod (419) being attached to the nut, using a second pivot connection which connects the connecting rod to the nut, so that the connecting rod is free to rotate relative to the nut about a second connecting rod axis (X496) parallel to the primary axis and orthogonal to the secondary axis (X432), the connecting rod forming with the action member a first anti-rotation compass to fasten the nut in rotation about the secondary axis relative to the stator, **characterized in that**:
- the force sensing device comprises a second anti-rotation compass (491), configured to block the nut (440) in rotation relative to the support (405) about the secondary axis (X432), and
- the connecting rod (419) is attached to the second anti-rotation compass (491) so as to be linked to the nut (440) via the second anti-rotation compass (491).

5. The force sensing device (401) according to claim 4, **characterized in that** the second anti-rotation compass (491) comprises:
- a first arm (492):
∘ which is attached to the nut (440) by a third pivot connection (442), whose axis (X442) is parallel to the primary axis (X413) and intersects the secondary axis (X432), so that the first arm (492) is free to rotate relative to the nut (440) about the axis (X442) of the third pivot connection (442), and
∘ which is attached to the connecting rod (419) by the second pivot connection (496), so that the first arm is free to rotate relative to the connecting rod about the axis (X496) of the second pivot connection,
- a second arm (493):
∘ which is attached to the first arm (492) by a fourth pivot connection (494), whose axis (X494) is parallel to the primary axis (X413), so that the first arm and the second arm are free to rotate relative to each other about the axis (X494) of the fourth pivot connection, and
∘ which is attached to the support (405) by a fifth pivot connection (495), whose axis (X495) is parallel to the primary axis (X413), so that the second arm (493) is free to rotate relative to the support (405) about the axis (X495) of the fifth pivot connection (495).

6. The force sensing device (1; 101; 401) according to any one of the preceding claims, **characterized in that** the stator (51; 151; 451) is fixedly attached to the support (5; 105; 405).

7. A force sensing device (201; 301) for a flight control (3) of an aircraft, the force sensing device comprising:
- a support,
- an action member (207), which is attached to the support while being free to rotate about a primary axis (X213),
- a rotary device (209), comprising a stator (251), which is attached to the support while being secured in rotation to the support about a secondary axis (X232), and a rotor (255), which is attached to the stator while being free to rotate relative to the stator about the secondary axis, the rotary device being designed so as to apply a force sensing torque on the rotor, relative to the stator, about the secondary axis, and
- a mechanical reducer (211), which relates, with a reduction ratio, the rotation of the action member relative to the support about the primary axis, with the rotation of the rotor relative to the stator about the secondary axis,
the mechanical reducer (211) comprising a screw-nut system (221) with rolling elements, which comprises:
- a screw (230), which is attached to the rotor (255) while being secured in rotation to the rotor about the secondary axis (X232), and
- a nut (240), which is:
∘ fixed in rotation about the secondary axis relative to the stator (251), and
∘ helically linked with the screw about and along the secondary axis, via the rolling elements,
**characterized in that** the stator (251) is attached to the support while being free to rotate about a stator axis (X251) relative to the support, the stator axis being parallel to the primary axis (X213).

8. The force sensing device (201; 301) according to claim 7, **characterized in that**:
- the screw (230) has two ends (235, 236) through which it is attached to a frame (280) of the force sensing device, while being free to rotate about the secondary axis (X232) relative to the frame, the frame being fastened to the stator (251), the nut (240) being movable within the frame, between the two ends of the screw, and
- an integral assembly, comprising the screw, the stator and the frame, has a center of gravity (290) crossed by the stator axis.

9. The force sensing device (201; 301) according to claim 7 or 8, **characterized in that** the action member (207) is attached to the nut (240) via a pivot connection (288) of the force sensing device, which alone connects the action member to the nut, so that the action member is free to rotate relative to the nut about a nut axis (X288) parallel to the primary axis (X213) and orthogonal to the secondary axis (X232).

10. The force sensing device (101) according to any one of the preceding claims, **characterized in that** the force sensing device comprises a system of rollers (166, 167) and rails (168,169) ensuring a blocking of the rotation of the nut (140) about the secondary axis (X132) relative to the stator (151).

11. The force sensing device (1; 101; 201; 301; 401) according to any one of the preceding claims, **characterized in that** the rotary device (9; 109; 209; 409) is an electric generator, an electric motor, or a magneto-rheological device.

12. A flight control (3) of an aircraft, the flight control comprising a force sensing device (1; 101; 201; 301; 401) in accordance with any one of the preceding claims, as well as a control member (2) which is operable by hand or by foot, and secured in rotation with the action member (7; 107; 207; 407) about the primary axis (X13; X113; X213; X413).
